# EUROPEAN PATENT APPLICATION

(11) **EP 4 657 723 A1**
(43) Date of publication of application: **03.12.2025**
(21) Application number: 23924838.8
(22) Date of filing: 26.06.2023
(51) Int. Cl.: H02K 9/19

(54) **HIGH-EFFICIENCY OIL-COOLED MOTOR**

(30) Priority: 27.02.2023 CN 202310170230
(71) Applicant: Lishui Founder Intelligent Drive Institute Co., Ltd., Lishui, Zhejiang 323000 (CN); Fangdi Application Technology (Shanghai) Co., Ltd, Shanghai 201806 (CN)
(72) Inventor: WANG, Chen, Lishui, Zhejiang 323000 (CN); LI, Liangzi, Lishui, Zhejiang 323000 (CN); GU, Zhengyong, Lishui, Zhejiang 323000 (CN); JIA, Fuchun, Lishui, Zhejiang 323000 (CN); LV, Peng, Lishui, Zhejiang 323000 (CN)
(74) Representative: Müller Schupfner & Partner Patent- und Rechtsanwaltspartnerschaft mbB (Muc)
(86) International application number: PCT/CN2023/102366
(87) International publication number: WO 2024/178877

(57) **Abstract**

The present invention relates to a high-efficiency oil-cooled motor, comprising a stator, a rotor and a casing. The stator comprises a stator core ring and stator teeth. The stator core ring comprises a yoke core ring and an inner diameter core ring. The multiple stator teeth are detachably arranged at intervals along the circumference between the yoke core ring and the inner diameter core ring. A plurality of axial oil grooves are further provided at intervals in the inner diameter core ring. At least one end of upper and lower ends of the stator is provided with an end oil guide disc. Rectangular grooves are formed in the end oil guide disc, an outer diameter oil groove and inner diameter oil grooves being respectively formed on inner and outer sides of the rectangular grooves. Radial oil passages are formed between adjacent winding holes. The outer diameter oil groove is communicated with an oil inlet. The inner sides of the rectangular grooves are further provided with axial oil holes communicated with the axial oil grooves. The present invention can make full use of punched stator slot materials, and effectively cool local hot spots of motor stators while ensuring good manufacturability, thus reducing the motor material cost and achieving a better performance output.

## Description

This application claims the benefit of priority to Chinese patent application No. 202310170230.1, filed on February 27, 2023, entitled "HIGH-EFFICIENCY OIL-COOLED MOTOR", the entire disclosures of which are incorporated herein by reference.

### TECHNICAL FIELD

The present disclosure relates to a permanent magnet synchronous drive motor for new energy vehicles, and more specifically to a high-efficiency oil-cooled motor.

### BACKGROUND

With a development of new energy vehicles both domestically and globally, a demand for their drive motors is increasing day by day. Both main manufacturers and motor suppliers are beginning to layout new energy drive motor industry, and competition is fierce. Nowadays, a general rise in the price of motor raw materials forces motor manufacturers to continuously optimize costs and provide both high-performance and cost-effective motors. A silicon steel sheet is a main component of a motor. In the process of punching a stator core of a conventional motor, a stator slot material punched out is often treated as a waste material, while a weight of the stator slot material accounts for about 1/5 of a weight of the silicon steel sheet in the stator, which causes a large amount of waste.

On the other hand, as windings of a flat wire motor have a large axial cross-sectional area, and flat wire windings of the motor adjacent to a slot opening are affected by an air gap harmonic magnetic field, proximity and skin effects will occur on the windings, which may cause high eddy current losses and more severe temperature. In addition, an axial middle section of the motor often has a long heat dissipation path, which may result in poor heat dissipation effect, and ultimately result in that a temperature of an inner diameter section and the axial middle section is generally higher than other positions of the stator of the motor. Conventional methods for cooling the stator mainly include housing water cooling or winding spray cooling. However, the conventional methods cannot cool the slot opening and middle portions of the windings, which may lead to a risk of local insulation failure.

Therefore, it is crucial to develop products with better performance and lower prices for increasingly competitive new energy drive motors.

### SUMMARY

In order to solve above technical problems, an objective of the present disclosure is to provide a high-efficiency oil-cooled motor, which can improve a utilization efficiency of raw materials and enhance a performance of the motor.

In order to achieve above objective, the present disclosure adopts following technical solutions:
A high-efficiency oil-cooled motor includes a stator, a rotor and a housing. The stator includes a stator core ring and a plurality of stator teeth, and the stator core ring includes a yoke core ring and an inner diameter core ring arranged concentrically with each other. The plurality of stator teeth are detachably arranged between the yoke core ring and the inner diameter core ring and spaced apart from each other along a circumferential direction of the stator, and a winding slot is formed between two adjacent stator teeth. A flat wire winding is inserted in the winding slot, and a gap is formed between the winding slot and each one of two sides of the flat wire winding adjacent to an outer edge of the winding slot. The inner diameter core ring is further provided with a plurality of axial oil grooves spaced apart from each other, and the plurality of axial oil grooves are provided at an inner side of the winding slot. At least one of an upper end and a lower end of the stator is provided with an end oil guide plate, and the end oil guide plate is provided with a plurality of rectangular grooves. An inner diameter oil groove is formed at an inner side of the plurality of rectangular grooves, and an outer diameter oil groove is formed at an outer side of the plurality of rectangular grooves. A radial oil passage is provided between adjacent winding holes, and two ends of the radial oil passage are respectively communicated with the outer diameter oil groove and the inner diameter oil groove. The outer diameter oil groove is communicated with an oil inlet, and an axial oil hole is provided at the inner side of the plurality of rectangular grooves and communicated with the plurality of axial oil grooves.

Optionally, two arc-shaped notches are respectively provided on two sides of an outer edge of each one of the plurality of rectangular grooves, and the two arc-shaped notches and the gap at two sides of the winding slot form an oil outlet groove.

Optionally, each one of the plurality of stator teeth has a trapezoidal cross-section, and a width of one end of each one of the plurality of stator teeth adjacent to the yoke core ring is greater than a width of the other end of each one of the plurality of stator teeth adjacent to the inner diameter core ring.

Optionally, an end oil outlet hole is provided on a side wall of the housing, and the oil inlet is provided on the side wall of the housing. An annular middle oil groove and an end oil groove are provided on an inner wall of the housing and spaced apart from each other, and a plurality of parallel axial oil passages are provided between the middle oil groove and the end oil groove and spaced apart from each other. Two end of each one of the plurality of parallel axial oil passages are respectively communicated with the middle oil groove and the end oil groove. The oil inlet is communicated with the middle oil groove, and the end oil outlet hole is provided on the side wall between the end oil guide plate and an end cover of the housing.

Optionally, two ends of each one of the plurality of the stator teeth are respectively connected with the yoke core ring and the inner diameter core ring by an inserting connection or a clamping connection.

Optionally, each one of the plurality of stator teeth is provided with a tooth root convex buckle or a tooth root concave buckle at one end, and an inner wall of the yoke core ring is provided with a buckle groove A configured to match with the tooth root convex buckle or a buckle groove B configured to match with the tooth root concave buckle.

Optionally, the plurality of stator teeth include a plurality of stator teeth A with a tooth root convex buckle at one end and a plurality of stator teeth B with a tooth root concave buckle at one end, and the plurality of stator teeth A and the plurality of stator teeth B are alternately arranged. An inner wall of the yoke core ring is provided with a buckle groove A configured to match with the tooth root convex buckle and a buckle groove B configured to match with the tooth root concave buckle.

Optionally, an outer wall of the inner diameter core ring is provided with an inner ring tooth groove, and the other end of each one of the plurality of stator teeth is clamped in the inner ring tooth groove.

Optionally, the stator core ring further includes a connecting tooth, and the yoke core ring and the inner diameter core ring are fixed to each other through the connecting tooth. The yoke core ring, the connecting tooth and the inner diameter core ring are integrally formed with each other.

Optionally, a groove opening is provided on a middle of each one of the plurality of axial oil grooves, and a side oil passage groove is provided on a middle of each one of the plurality of stator teeth and communicated with the groove opening.

Compared with conventional technology, the embodiments of the present disclosure have following beneficial effects:
The stator of the present disclosure adopts a spliced structure, and the stator core ring and the plurality of stator teeth are assembled into a complete stator core, and then flat wire windings are inserted into the stator core, which can achieve convenient overall installation. Moreover, the stator teeth are formed of stator slot materials that were originally used as waste materials, which can save silicon steel sheet materials. By opening oil passages on the stator core ring, cooling oil flows through local overheating spots for direct cooling. The oil passages on the stator core ring are communicated with the end oil guide plate, so that the end oil guide plate can form an oil chamber with the stator teeth and the flat wire windings, which can further improve a cooling efficiency and enhance an overall performance of the motor.

The present disclosure can fully utilize punched stator slot materials and effectively cool the local overheating spots of the stator of the motor while ensuring good processability, which can reduce motor material costs and achieve good performance output.

### BRIEF DESCRIPTION OF THE DRAWINGS

The accompanying drawings described herein are intended to provide a further understanding of the present disclosure, and constitute a portion of the present disclosure. Example embodiments of the present disclosure and descriptions thereof are intended to describe the present disclosure, and do not constitute limitations on the present disclosure.
FIG. 1 shows a schematic overall structural view of a housing, a stator (not including flat wire windings) and an end oil guide plate according to an embodiment of the present disclosure;
FIG. 2 shows a schematic structural top view of a stator core ring and stator teeth in an assembled state according to an embodiment of the present disclosure;
FIG. 3 shows a schematic structural top view of a stator core ring according to an embodiment of the present disclosure;
FIG. 4 shows a schematic structural perspective view of a stator core ring according to an embodiment of the present disclosure;
FIG. 5 shows an enlarged schematic structural view of part A of FIG. 4;
FIG. 6 shows a three-side view of a stator tooth A according to an embodiment of the present disclosure;
FIG. 7 shows a three-side view of a stator tooth B according to an embodiment of the present disclosure;
FIG. 8 shows a schematic structural cross-sectional view of a stator core ring, stator teeth and flat wire windings in an assembled state according to an embodiment of the present disclosure;
FIG. 9 shows an enlarged schematic structural view of part C of FIG. 8;
FIG. 10 shows a schematic structural cross-sectional view of an end oil guide plate according to an embodiment of the present disclosure;
FIG. 11 shows a schematic view illustrating an overall cross-sectional structure of an end oil guide plate, flat wire windings, a stator core ring and stator teeth according to an embodiment of the present disclosure;
FIG. 12 shows an enlarged schematic structural view of part D of FIG. 11; and
FIG. 13 shows a schematic structural view of a housing according to an embodiment of the present disclosure.

Reference numerals: 1. stator tooth A; 2. stator tooth B; 3. stator core ring; 4. end oil guide plate; 5. housing; 6. flat wire winding; 1-1. tooth root convex buckle; 1-2. side oil passage groove A; 2-1. tooth root concave buckle; 2-2. side oil passage groove B; 3-1. yoke core ring; 3-2. connecting tooth; 3-3. inner diameter core ring; 3-1-1. buckle groove A; 3-1-2. buckle groove B; 3-3-1. axial oil groove; 3-3-2. inner ring tooth groove; 3-3-3. groove opening; 4-1. outer diameter oil groove; 4-2. radial oil passage; 4-3. inner diameter oil groove; 4-4. axial oil hole; 4-5. rectangular groove; 4-6. oil outlet groove; 5-1. oil inlet; 5-2. middle oil groove; 5-3. end oil groove; 5-4. parallel axial oil passage; 5-5. end oil outlet hole.

### DETAILED DESCRIPTION

It should be noted that the following detailed description is exemplary and is intended to provide further explanation of the present disclosure. Unless defined otherwise, all technical and scientific terms used herein have the same meaning as commonly understood by those skilled in the art.

It should be noted that the terms used herein are for the purpose of describing particular embodiments only, rather than limiting example embodiments according to the present disclosure. For example, as used herein, a singular form is intended to include a plural form, unless the context clearly indicates otherwise. It should be further understood that the terms "comprise" and/or "include" when used in this description, specify the presence of stated features, steps, operations, elements, components and/or groups thereof.

Furthermore, in the description of the present disclosure, it should be understood that the terms "center", "longitudinal", "lateral", "length", "width", "thickness", "upper", "lower", "front", "rear", "left", "right", "vertical", "horizontal", "top", "bottom", "inner", "clockwise", "counterclockwise", and the like, indicate orientations and positional relationships based on those shown in the drawings, and are only for convenience of description and simplicity of description, but do not indicate or imply that the device or element being referred to must have a particular orientation, be constructed and operated in a particular orientation, and thus, should not be considered as limiting the present disclosure.

Furthermore, the terms "first" and "second" are used for descriptive purposes only and are not to be construed as indicating or implying relative importance or implicitly indicating the number of technical features indicated. Thus, a feature defined as "first" or "second" may explicitly or implicitly includes one or more of those features. In the description of the present disclosure, "a plurality" means two or more, unless the context clearly indicates otherwise.

In the present disclosure, unless otherwise expressly specified or limited, the terms "mounted", "coupled", "connected", "fixed" and the like are to be construed broadly and can, for example, be fixedly connected, detachably connected, or integrally connected, can be mechanically or electrically connected, or can be connected directly or indirectly through intervening media, or can be interconnected between two elements. The specific meanings of the above terms in the present disclosure can be understood by those skilled in the art according to specific situations.

In the present disclosure, unless otherwise expressly specified or limited, a first feature "above" or "below" a second feature means that the first feature and the second feature are in direct contact, or the first feature and the second feature are not in direct contact but are in contact with each other through another feature therebetween. Also, the first feature "on", "above" and "over" the second feature means that the first feature is directly above and obliquely above the second feature, or simply indicates that the first feature is at a higher level than the second feature. The first feature "under", "below", and "beneath" the second feature means that the first feature is directly under and obliquely below the second feature, or simply means that the first feature is at a lower level than the second feature.

The present disclosure will be further explained with reference to the following embodiments and drawings.

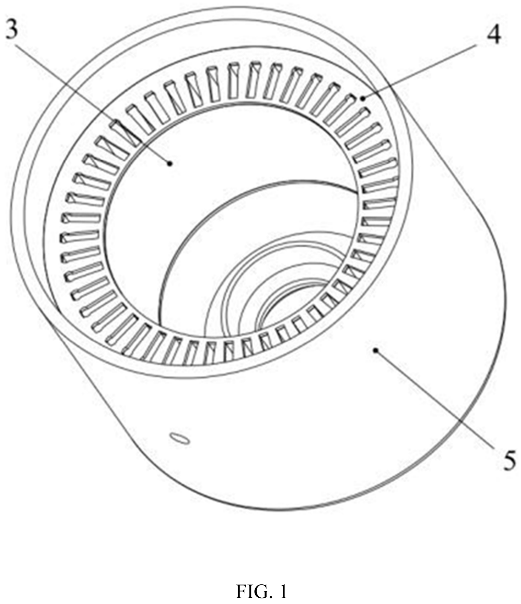

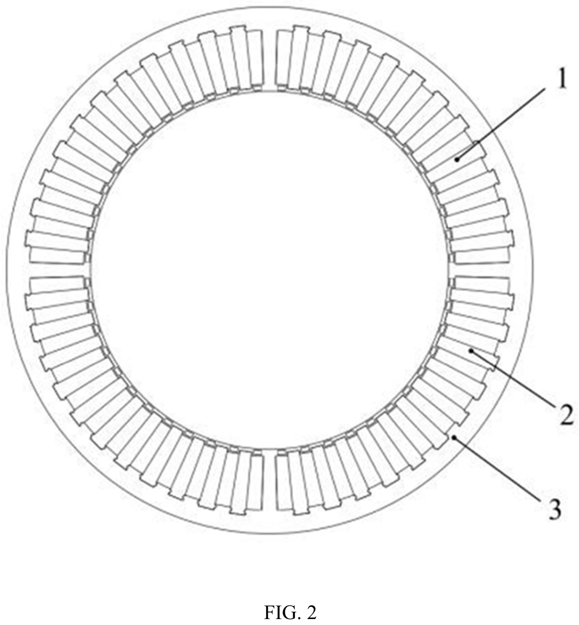

As shown in FIGS. 1 and 2, a high-efficiency oil-cooled motor includes a stator, a rotor and a housing 5. The stator includes a stator core ring 3 and a plurality of stator teeth. The stator core ring 3 includes a yoke core ring 3-1 and an inner diameter core ring 3-3. The yoke core ring 3-1 is arranged concentrically with the inner diameter core ring 3-3, and the plurality of stator teeth are detachably arranged between the yoke core ring 3-1 and the inner diameter core ring 3-3 and spaced from each other along a circumferential direction of the stator. A winding slot is formed between adjacent stator teeth, and a flat wire winding 6 is inserted into the winding slot.

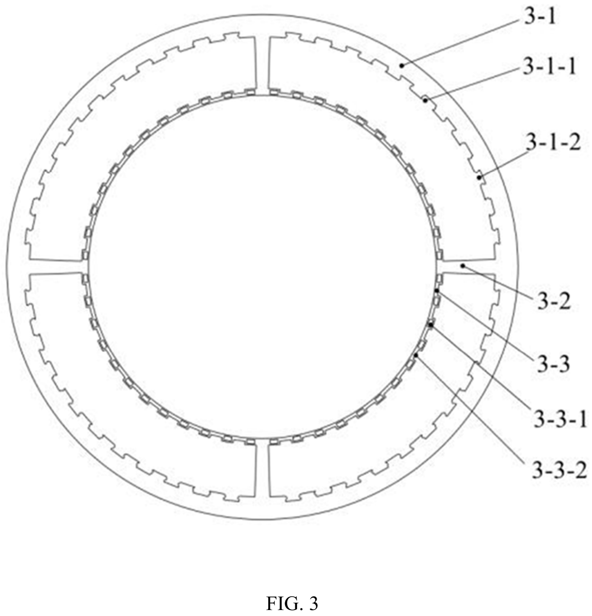

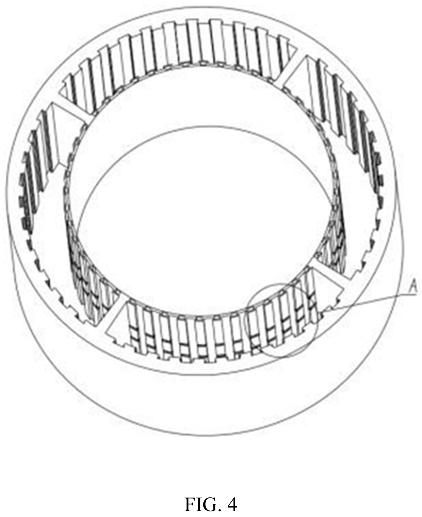

As shown in FIGS. 3 to 5, the stator core ring 3 further includes a connecting tooth 3-2, and the yoke core ring 3-1 and the inner diameter core ring 3-3 are fixed to each other through the connecting tooth 3-2. The yoke core ring 3-1, the connecting tooth 3-2 and the inner diameter core ring 3-3 may be integrally formed. An inner-outer ring structure of the stator is formed by stacking multiple segments in an axial direction. Two ends of the stator teeth are respectively connected with the yoke core ring 3-1 and the inner diameter core ring 3-3 by an inserting connection or a clamping connection.

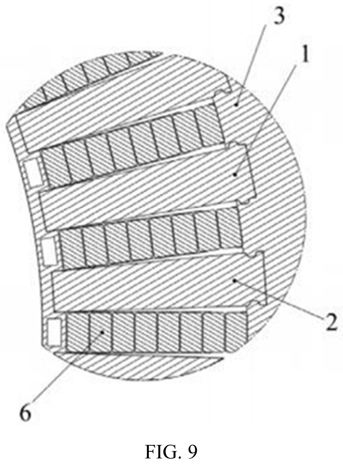

The stator teeth may be of the same specification and the same shape, or the stator teeth may also be of two specifications, including a stator tooth A 1 having a tooth root convex buckle 1-1 at one end and a stator tooth B 2 having a tooth root concave buckle 2-1 at one end. A plurality of stator teeth A 1 and a plurality of stator teeth B 2 are arranged alternately and spaced apart from each other. An inner wall of the yoke core ring 3-1 is provided with a buckle groove A 3-1-1 and a buckle groove B 3-1-2. The buckle groove A 3-1-1 is configured to match with the tooth root convex buckle 1-1, and the buckle groove B 3-1-2 is configured to match with the tooth root concave buckle 2-1, as shown in FIG. 3 and FIGS. 6 to 9.

An outer wall of the inner diameter core ring 3-3 is provided with a plurality of inner ring tooth grooves 3-3-2, and the other end of the stator teeth is clamped in corresponding inner ring tooth grooves 3-3-2.

When designing the stator teeth, the number of stator slots is set to Z, and a circular silicon steel sheet raw material is divided into Z equal parts, that is, the raw material is punched to form Z pairs of same stator tooth groups. Each part is further divided into a pair of stator teeth from a center line, and tooth roots of the pair of stator teeth are designed as a snap structure including a convex part and a concave part assembled to form a set of stator. In this way, the circular silicon steel sheet raw material can be punched to form 2Z stator teeth, which are the stator teeth of two motors. Using the two specifications of stator teeth mentioned above can not only save materials, but also make assembled motor stator structure more stable.

The stator teeth are formed by punching and laminating high-grade circular silicon steel sheets, and one circular silicon steel sheet can be punched out to form two sets of stator teeth of the motor. The stator core ring is integrally formed. For high-performance motors, the material is formed by punching a SMC material. For cost-effective motors, the material may be cast in multiple sections using a high magnetization cast iron material (a combination of multiple sections in the axial direction can greatly reduce eddy current losses). The stator teeth are respectively inserted into the stator core ring to form the stator core.

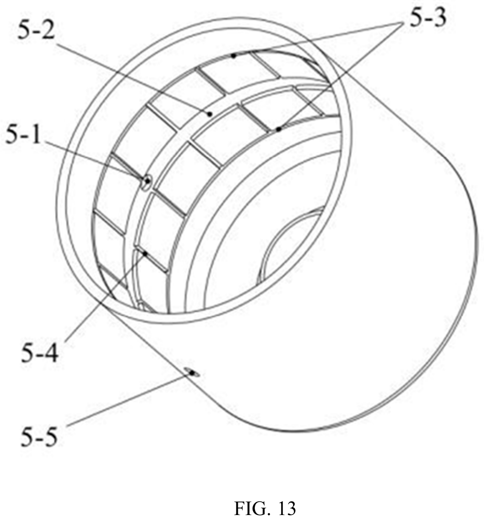

As shown in FIG. 13, a side wall of the housing is provided with an oil inlet 5-1 and an end oil outlet hole 5-5, and an inner wall of the housing is provided with an annular middle oil groove 5-2 and an end oil groove 5-3 spaced apart from each other. A plurality of parallel axial oil passages 5-4 are provided between the middle oil groove 5-2 and the end oil groove 5-3 and spaced apart from each other. Two ends of each one of the plurality of parallel axial oil passages 5-4 are respectively communicated with the middle oil groove 5-2 and the end oil groove 5-3. The oil inlet 5-1 is communicated with the middle oil groove 5-2, and the end oil outlet hole 5-5 is provided on the side wall between an end oil guide plate 4 and an end cover of the housing.

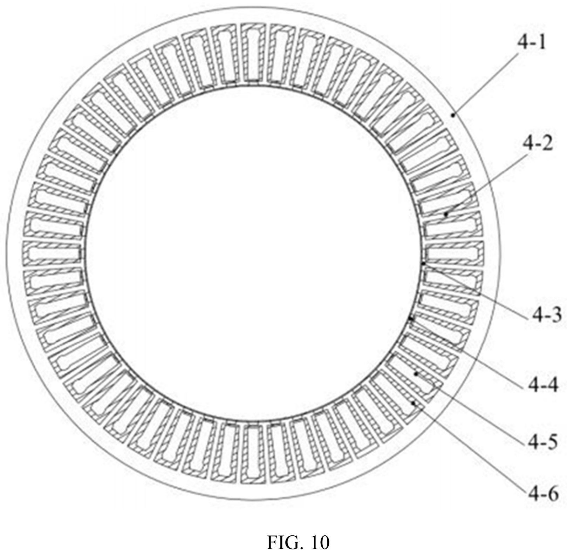

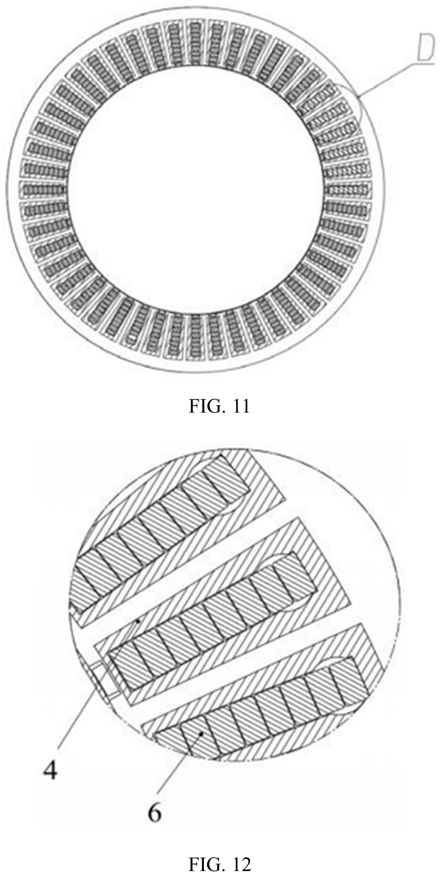

The inner diameter core ring 3-3 is further provided with a plurality of axial oil grooves 3-3-1 spaced apart from each other, and the plurality of axial oil grooves 3-3-1 are provided at an inner side of the winding slot. At least one of an upper end and a lower end of the stator is provided with an end oil guide plate 4. The end oil guide plate 4 is provided with a plurality of rectangular grooves 4-5. In some embodiments, two end oil guide plates are attached to two ends of the stator core ring respectively, and the rectangular grooves having a width equal to a width of a top of the winding slot are opened at a position corresponding to the winding slot, so as to fix a position of a left side and a right side when inserting flat copper wires. An outer diameter oil groove 4-1 is formed at an outer side of the plurality of rectangular grooves 4-5, and an inner diameter oil groove 4-3 is formed at an inner side of the plurality of rectangular grooves 4-5. A radial oil passage 4-2 is formed between adjacent winding holes, and two ends of the radial oil passage 4-2 are respectively communicated with the outer diameter oil groove 4-1 and the inner diameter oil groove 4-3. The outer diameter oil groove 4-1 is communicated with the oil inlet 5-1 through the end oil groove 5-3, the parallel axial oil passages 5-4 and the middle oil groove 5-2 on the housing. An axial oil hole 4-4 is provided at the inner side of the plurality of rectangular grooves 4-5 and communicated with the plurality of axial oil grooves 3-3-1 (as shown in FIGS. 10 to 12).

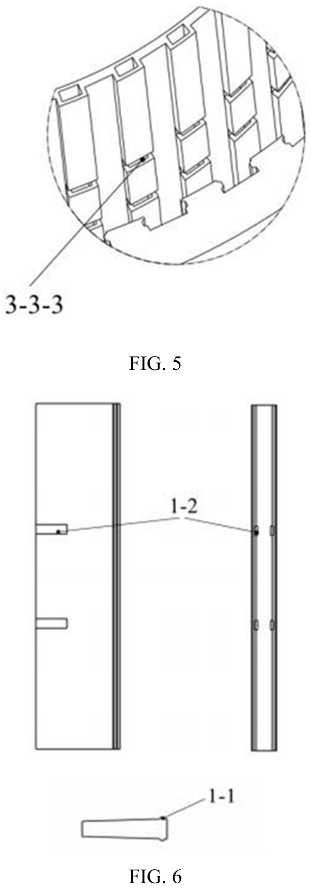

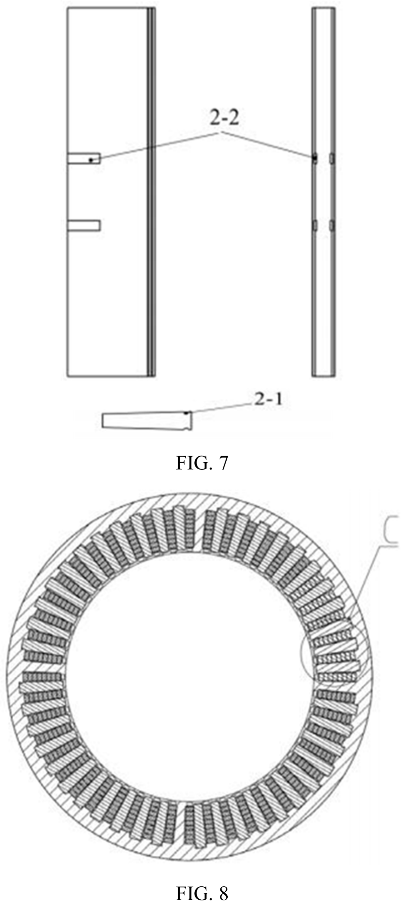

A groove opening 3-3-3 is provided on a middle of the axial oil grooves 3-3-1, and a side oil passage groove is provided on a middle of the stator teeth. The groove opening 3-3-3 is communicated with the side oil passage groove. A side oil passage groove A 1-2 is formed on a middle of the stator tooth A 1, and a side oil passage groove B 2-2 is formed on a middle of the stator tooth B 2 (as shown in FIGS. 6 and 7).

The stator teeth have a trapezoidal cross-section, and a width of one end of the stator teeth adjacent to the yoke core ring 3-1 is greater than a width of the other end of the stator teeth adjacent to the inner diameter core ring 3-3. There is a gap between the winding slot and two sides of the flat wire winding 6 adjacent to an outer edge of the winding slot. Two arc-shaped notches are respectively provided on two sides of an outer edge of each rectangular groove 4-5, and the two arc-shaped notches and the gap at two sides of the winding slot form an oil outlet groove 4-6 for a cooling oil to flow out finally.

The end oil guide plate of the present disclosure is attached to two ends of the stator core ring and embedded in a water channel of the housing. The cooling oil enters the middle oil groove of the housing through the oil inlet, enters the end oil groove of the housing through the parallel axial oil passages, flows to the outer diameter oil groove of the end oil guide plate, flows into the inner diameter oil groove 4-3 of the end oil guide plate through the radial oil passage, flows into the axial oil groove 3-3-1 of the stator core ring, and then flows from the groove opening 3-3-3 on the middle of the inner diameter core ring 3-3 through the side oil passage groove on the stator teeth to an oil chamber formed by the winding (insulation paper), the stator teeth and the end oil guide plate at two ends in the axial direction in the winding slot, and finally flows out axially from grooves on two sides of the end oil guide plate and sprays towards end windings, ultimately achieving an all-round cooling of the cooling oil for a stator outer diameter, a stator inner diameter, flat wire slots and end windings.

According to the present disclosure, the width of teeth slots of a flat wire motor is substantially the same, and an angle of the teeth slots is set to be the same, so that the stator slot material originally used as a waste material can be used as stator teeth during punching, which can save silicon steel sheet materials. The inner-outer ring of the stator core is formed through integrated molding and stacking multiple segments in the axial direction, and the stator teeth are inserted into the stator core ring to form the entire stator core. By easy manufacturing of oil passages through integrated molding, axial oil passages are opened at inner and outer diameters, thus the cooling oil flows through local overheating spots for direct cooling.

According to the present disclosure, the angle of the stator teeth A and the angle of the stator teeth B are equal, and a sum of the angle of the stator tooth A and the angle of the stator tooth B is equal to 360/Z (Z represents stator teeth). Therefore, one stator ring material can punch out 2Z stator teeth, which can be fully utilized. The teeth roots of two stator teeth are respectively provided with a convex part and a concave part that can be interlocked. The stator core ring is composed of an inner ring and an outer ring connected by a plurality of connecting teeth. The outer ring is provided with buckle grooves corresponding to tooth root buckles of the stator teeth, and the inner ring is provided with buckle grooves corresponding to tooth tips of the stator teeth. The axial oil grooves are also provided in the slot opening, and the axial oil grooves are opened in the middle. The stator teeth are respectively inserted into the stator core ring to form the stator core.

According to the present disclosure, two axial ends of the stator core are respectively provided with the end oil guide plate. With the end oil guide plate, the rectangular grooves of the end oil guide plate can position the flat wire winding, and the grooves opened at the bottom of the rectangular grooves can achieve oil passage without affecting positioning of the flat wire windings, and the end oil guide plate can form an oil chamber with the stator teeth and flat wires.

In the description of the present disclosure, the terms such as "one embodiment", "some embodiments", "examples", "specific examples", or "some examples" mean that specific features, structures, materials, or characteristics described in conjunction with the embodiments or examples are included in at least one embodiment or example of the present disclosure. In the description, the illustrative expressions of the above terms may not necessarily refer to the same embodiments or examples. Moreover, the specific features, structures, materials, or characteristics can be combined in an appropriate manner in any one or more embodiments or examples.

Although embodiments of the present disclosure have been shown and described above, it can be understood that the above embodiments are exemplary and cannot be understood as limitations to the present disclosure. An ordinary person skilled in the art can make changes, modifications, substitutions and variations to the above embodiments within the scope of the present disclosure without departing from the principles and objectives of the present disclosure. Any simple modifications, equivalent changes or modifications made to the above embodiments based on the technical essence of the present disclosure still fall within the scope of the technical solution of the present disclosure.

## Claims

1. A high-efficiency oil-cooled motor, comprising a stator, a rotor and a housing (5);
wherein the stator comprises a stator core ring (3) and a plurality of stator teeth, and the stator core ring (3) comprises a yoke core ring (3-1) and an inner diameter core ring (3-3) arranged concentrically with each other;
wherein the plurality of stator teeth are detachably arranged between the yoke core ring (3-1) and the inner diameter core ring (3-3) and spaced apart from each other along a circumferential direction of the stator, and a winding slot is formed between two adjacent stator teeth, wherein a flat wire winding (6) is inserted in the winding slot, and a gap is formed between the winding slot and each one of two sides of the flat wire winding (6) adjacent to an outer edge of the winding slot;
wherein the inner diameter core ring (3-3) is further provided with a plurality of axial oil grooves (3-3-1) spaced apart from each other, and the plurality of axial oil grooves (3-3-1) are provided at an inner side of the winding slot;
wherein at least one of an upper end and a lower end of the stator is provided with an end oil guide plate (4), and the end oil guide plate (4) is provided with a plurality of rectangular grooves (4-5), wherein an inner diameter oil groove (4-3) is formed at an inner side of the plurality of rectangular grooves (4-5), and an outer diameter oil groove (4-1) is formed at an outer side of the plurality of rectangular grooves (4-5);
wherein a radial oil passage (4-2) is provided between adjacent winding holes, and two ends of the radial oil passage (4-2) are respectively communicated with the outer diameter oil groove (4-1) and the inner diameter oil groove (4-3); and
wherein the outer diameter oil groove (4-1) is communicated with an oil inlet (5-1), and an axial oil hole (4-4) is provided at the inner side of the plurality of rectangular grooves (4-5) and communicated with the plurality of axial oil grooves (3-3-1).

2. The high-efficiency oil-cooled motor according to claim 1, wherein two arc-shaped notches are respectively provided on two sides of an outer edge of each one of the plurality of rectangular grooves (4-5), and the two arc-shaped notches and the gap at two sides of the winding slot form an oil outlet groove (4-6).

3. The high-efficiency oil-cooled motor according to claim 1, wherein each one of the plurality of stator teeth has a trapezoidal cross-section, and a width of one end of each one of the plurality of stator teeth adjacent to the yoke core ring (3-1) is greater than a width of the other end of each one of the plurality of stator teeth adjacent to the inner diameter core ring (3-3).

4. The high-efficiency oil-cooled motor according to claim 1, wherein an end oil outlet hole (5-5) is provided on a side wall of the housing, and the oil inlet (5-1) is provided on the side wall of the housing;
wherein an annular middle oil groove (5-2) and an end oil groove (5-3) are provided on an inner wall of the housing and spaced apart from each other, and a plurality of parallel axial oil passages (5-4) are provided between the middle oil groove (5-2) and the end oil groove (5-3) and spaced apart from each other, wherein two end of each one of the plurality of parallel axial oil passages (5-4) are respectively communicated with the middle oil groove (5-2) and the end oil groove (5-3); and
wherein the oil inlet (5-1) is communicated with the middle oil groove (5-2), and the end oil outlet hole (5-5) is provided on the side wall between the end oil guide plate (4) and an end cover of the housing.

5. The high-efficiency oil-cooled motor according to claim 1, wherein two ends of each one of the plurality of the stator teeth are respectively connected with the yoke core ring (3-1) and the inner diameter core ring (3-3) by an inserting connection or a clamping connection.

6. The high-efficiency oil-cooled motor according to claim 1, wherein each one of the plurality of stator teeth is provided with a tooth root convex buckle (1-1) or a tooth root concave buckle (2-1) at one end, and an inner wall of the yoke core ring (3-1) is provided with a buckle groove A (3-1-1) configured to match with the tooth root convex buckle (1-1) or a buckle groove B (3-1-2) configured to match with the tooth root concave buckle (2-1).

7. The high-efficiency oil-cooled motor according to claim 1, wherein the plurality of stator teeth comprise a plurality of stator teeth A (1) with a tooth root convex buckle (1-1) at one end and a plurality of stator teeth B (2) with a tooth root concave buckle (2-1) at one end, and the plurality of stator teeth A (1) and the plurality of stator teeth B (2) are alternately arranged, wherein an inner wall of the yoke core ring (3-1) is provided with a buckle groove A (3-1-1) configured to match with the tooth root convex buckle (1-1) and a buckle groove B (3-1-2) configured to match with the tooth root concave buckle (2-1).

8. The high-efficiency oil-cooled motor according to claim 6 or 7, wherein an outer wall of the inner diameter core ring (3-3) is provided with an inner ring tooth groove (3-3-2), and the other end of each one of the plurality of stator teeth is clamped in the inner ring tooth groove (3-3-2).

9. The high-efficiency oil-cooled motor according to claim 1, wherein the stator core ring (3) further comprises a connecting tooth (3-2), and the yoke core ring (3-1) and the inner diameter core ring (3-3) are fixed to each other through the connecting tooth (3-2), wherein the yoke core ring (3-1), the connecting tooth (3-2) and the inner diameter core ring (3-3) are integrally formed with each other.

10. The high-efficiency oil-cooled motor according to claim 1, wherein a groove opening (3-3-3) is provided on a middle of each one of the plurality of axial oil grooves (3-3-1), and a side oil passage groove is provided on a middle of each one of the plurality of stator teeth and communicated with the groove opening (3-3-3).
